# EUROPÄISCHE PATENTSCHRIFT

(11) **EP 2 288 861 B1**
(45) Veröffentlichungstag und Bekanntmachung des Hinweises auf die Patenterteilung: **07.12.2011**
(21) Anmeldenummer: 08774294.6
(22) Anmeldetag: 25.06.2008
(51) Int. Cl.: F27B 7/20, B01D 45/16, B01D 45/12, C04B 7/43, B04C 5/04, B04C 1/00, B01J 19/24

(54) **VORRICHTUNG ZUR DURCHFÜHRUNG CHEMISCHER UND/ODER PHYSIKALISCHER REAKTIONEN ZWISCHEN EINEM FESTSTOFF UND EINEM GAS**
DEVICE FOR PERFORMING CHEMICAL AND/OR PHYSICAL REACTIONS BETWEEN A SOLID MATERIAL AND A GAS
DISPOSITIF POUR RÉALISER DES RÉACTIONS CHIMIQUES ET/OU PHYSIQUES ENTRE UNE MATIÈRE SOLIDE ET UN GAZ

(43) Veröffentlichungstag der Anmeldung: 02.03.2011
(73) Patentinhaber: ThyssenKrupp Polysius AG, 59269 Beckum (DE)
(72) Erfinder: GEORG, Verena, 58313 Herdecke (DE); KUPPER, Detlev, 48291 Telgte (DE); LAGAR GARCIA, Luis, 33001 Oviedo (ES); HOPPE, Andreas, 59555 Lippstadt (DE); THIEMEYER, Heinz-Werner, 59320 Ennigerloh (DE); KLEGRAF, Daniel, 59602 Rüthen-Westereiden (DE); DECK, Thomas, 59320 Ennigerloh (DE); RICHTER, Stefanie, 32756 Detmold (DE)
(74) Vertreter: Tetzner, Michael
(86) Internationale Anmeldenummer: PCT/EP2008/058101
(87) Internationale Veröffentlichungsnummer: WO 2009/155973

(56) Entgegenhaltungen:
- US-A- 2 866 272
- US-A- 4 318 692

## Beschreibung

Die Erfindung betrifft eine Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit mehreren, übereinander angeordneten Stufen.

Aus der Praxis sind zur Vorwärmung, Kühlung und/oder Calcinierung von feinkörnigen Materialien insbesondere Systeme bestehend aus Gleichstromwärmetauscher und Zyklonabscheider bekannt. Meist weisen derartige Vorrichtungen mehrere übereinander angeordnete Stufen auf, wobei der Gasstrom von unten nach oben durch alle Stufen geleitet wird, während der Feststoff in entgegengesetzter Richtung den einzelnen Stufen zugeführt wird.

Derartige Systeme haben den Nachteil, dass sie eine enorme Bauhöhe benötigen und der Abscheidegrad im Zyklonabscheider nicht immer befriedigend ist. So kommt es in den Zyklonen oftmals zu unkontrollierten Strömungen, die beispielsweise am Zykloneintritt durch Überlagerung des Eintrittsgasstromes mit dem im Zyklon ausgebildeten Wirbelstrom oder durch Umkehr der Gasströmungsrichtung im Konus des Zyklons bedingt sind. Weiterhin kann es zum Wiedereinstreuen der schon am Zyklonrand abgeschiedenen Partikel in den Gaseintrittstrom des Zyklons kommen.

Eine weitere Problematik besteht darin, dass sich bei unterschiedlich großen Bauformen die Zentrifugalkräfte bei gleichen Eintrittsgeschwindigkeiten verändern und sich dadurch andere Abscheideverhältnisse ergeben.

In der US 4,318,692 wurde daher ein mehrstufiger Vorwärmer für Zementrohmaterial vorgeschlagen, dessen einzelne Stufen jeweils aus einer Steigleitung und einer sich anschließenden wendel- und/oder spiralartigen Leitung bestehen. Die wendel- und/oder spiralartige Leitung weist einen rechteckigen Querschnitt auf und ist an einer Seite eines viereckigen Trichters angeschlossen, in dem der Feststoff und das Gas durch Zentrifugal- und Trägheitskräfte endgültig abgeschieden werden.

Die US 2,866,272 beschreibt einen Zyklonvorwärmer mit drei nebeneinander angeordneten Stufen.

Der Erfindung liegt nun die Aufgabe zugrunde, die Vorrichtung zur Durchführung chemischer und/oder physikalischer Reaktionen zwischen einem Feststoff und einem Gas hinsichtlich der Bauhöhe zu verringern.

Erfindungsgemäß wird diese Aufgabe durch die Merkmale des Anspruches 1 gelöst.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien, mit wenigstens drei übereinander angeordneten Stufen, wobei jede Stufe folgende Bauteile umfasst:
a. eine Gas-Feststoff-Suspensionsleitung zum Leiten einer Gas-Feststoff-Suspension, die zumindest teilweise als wendel- und/oder spiralartige Leitung ausgebildet ist,
b. Mittel zum Trennen des zugeführten Feststoffs vom zugeführten Gas,
c. eine Feststoffleitung zum Ableiten des abgetrennten Feststoffs
d. sowie eine Gasleitung zum Ableiten des abgetrennten Gases,
wobei die Gasleitung einer Stufe in die Gas-Feststoff-Suspensionsleitung der nächst höheren Stufe übergeht und die Feststoffleitung einer Stufe in der Gas-Feststoff-Suspensionsleitung der nächst niedrigeren Stufe mündet.

Ferner sind die drei Stufen kompakt und ineinander verschlungen angeordnet und die Einmündung der Feststoffleitung in die Gas-Feststoff-Suspensionsleitung der dritten bzw. einer höheren Stufe ist unterhalb des höchsten Punktes der zwei Stufen niedriger angeordneten Gas-Feststoff Suspensionsleitung vorgesehen.

Mit einem derartigen Aufbau lässt sich eine deutliche Reduzierung der Bauhöhe der Vorrichtung erreichen.

Weitere Ausgestaltungen der Erfindung sind Gegenstand der Unteransprüche.

Gemäß einer bevorzugten Ausgestaltung der Erfindung umfasst die Gas-Feststoff-Suspensionsleitung einen aufsteigenden und einen absteigenden Leitungsabschnitt, die durch eine Steigleitung und eine absteigende wendel- und/oder spiralartige Leitung gebildet werden können. Ferner kann ein Umlenkkopf vorgesehen werden, der die Steigleitung mit der wendel- und/oder spiralartigen Leitung verbindet. Durch den aufsteigenden und absteigenden Leitungsabschnitt wird einerseits eine ausreichende Kontaktzeit zwischen Feststoff und Gas gewährleistet und andererseits kann die Bauhöhe weiter reduziert werden.

Unter einer wendel- und/oder spiralartigen Leitung im Sinne der Erfindung wird eine Leitung verstanden, die zumindest abschnittsweise wendel- und/oder spiralförmig ausgebildet ist. Die Drehung der wendel- und/oder spiralartigen Leitung kann sich dabei insbesondere auch nur über einen kleineren Winkelbereich, von beispielsweise 90°, erstrecken.

In einer weiteren Ausgestaltung sind die wendel- und/oder spiralartigen Leitungen aufeinander folgender Stufen abwechselnd links- und rechtsdrehend ausgerichtet. Durch die wechselnde Drehrichtung ergibt sich eine äußerst kompakte Konstruktion der Vorrichtung, die eine weitere Reduzierung der Bauhöhe ermöglicht. So kann beispielsweise gegenüber einem herkömmlichen, 5-stufigen Zyklon-Schwebegaswärmetauscher eine Reduzierung der Bauhöhe von bis zu 25 % erreicht werden.

Es kann weiterhin vorgesehen, dass die Feststoffleitung und die Gasleitung mit dem Ende der wendel- und/oder spiralartigen Leitung in Verbindung steht, wobei beispielsweise am Ende der wendel- und/oder spiralartigen Leitung eine Abscheidekammer vorgesehen ist, an welche die Feststoffleitung zum Ableiten des Feststoffstroms und die Gasleitung zum Ableiten des Gasstroms angeschlossen sind.

Weitere Vorteile und Ausgestaltungen der Erfindung werden im Folgenden anhand der Beschreibung und der Zeichnung näher erläutert.

In der Zeichnung zeigen
- Fig. 1: eine Seitenansicht einer Stufe der Vorrichtung,
- Fig. 2: eine um 90° gedrehte Seitenansicht gemäß Fig. 1,
- Fig. 3: eine Draufsicht der Stufe gemäß Fig. 1,
- Fig. 4: eine Seitenansicht der Vorrichtung mit drei übereinander angeordneten Stufen und
- Fig. 5: eine Draufsicht der Vorrichtung gemäß Fig. 4.

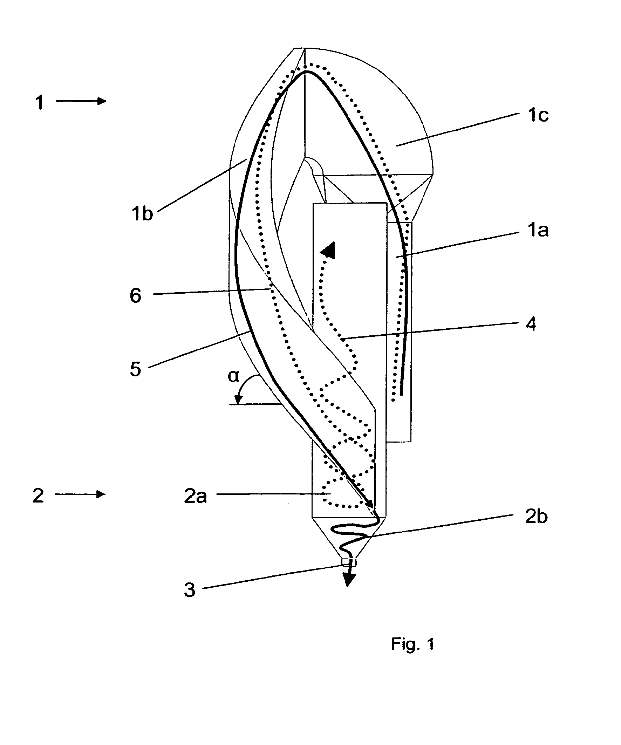

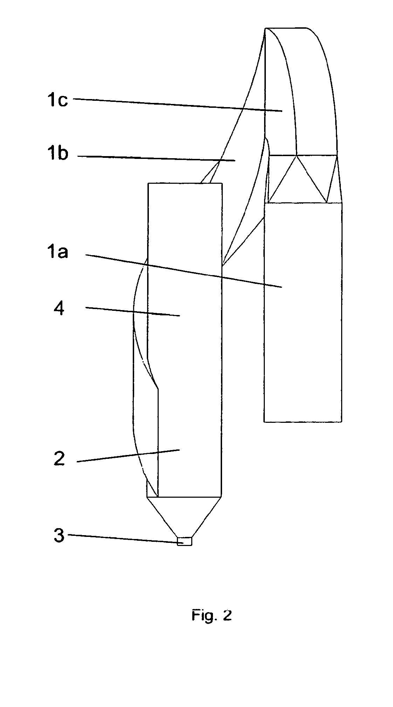

In den Figuren 1 bis 3 wird zunächst eine Stufe einer Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien näher dargestellt.

Sie besteht im Wesentlichen aus einer Gas-Feststoff-Suspensionsleitung 1, Mitteln zum Trennen des zugeführten Feststoffs vom zugeführten Gas, welche im dargestellten Ausführungsbeispiel durch eine Abscheidekammer 2 gebildet werden, einer Feststoffleitung 3 zum Ableiten des abgetrennten Feststoffs sowie einer Gasleitung 4 zum Ableiten des abgetrennten Gases.

Zur Durchführung chemischer und/oder physikalischer Reaktionen zwischen einem Feststoff 5 und einem Gas 6 wird die Gas-Feststoff Suspension über die Gas-Feststoff-Suspensionsleitung 1 der Abscheidekammer 2 zugeführt.

Die Gas-Feststoff-Suspensionsleitung 1 weist einen als Steigleitung 1a ausgebildeten aufsteigenden und einen als wendel- und/oder spiralartige Leitung 1b ausgebildeten absteigenden Leitungsabschnitt auf. Weiterhin ist ein Umlenkkopf 1c vorgesehen, der die Steigleitung 1a mit der wendel- und/oder spiralartigen Leitung 1b verbindet. In vertikaler Richtung betrachtet liegt zumindest der Anfang der wendel- und/oder spiralartigen Leitung 1b höher als ihr Mündungsende an der Abscheidekammer 2. In der wendel- und/oder spiralartigen Leitung 1b kommt es aufgrund der Zentrifugalkräfte zu einer Trennung der Gas-Feststoff-Suspension in einen Feststoffstrom und einen Gasstrom.

Im Rahmen der Erfindung ist es denkbar, dass sich der Radius und/oder die Steigung und/oder die Querschnittsform und/oder die Querschnittsgröße der wendel- und/oder spiralartigen Leitung 1b im Strömungsrichtung der Gas-Feststoff-Suspension ändert. Auf diese Weise kann einerseits Einfluss auf die Vorseparierung der Gas-Feststoff-Suspension im Bereich der wendel- und/oder spiralartigen Leitung genommen werden und andererseits kann die wendel- und/oder spiralartige Leitung 1 an äußere Gegebenheiten angepasst werden. Dies ist insbesondere dann von Vorteil, wenn mehrere Stufen ineinander verschachtelt und übereinander angeordnet werden.

Der Radius, Steigung, Querschnittsform und/oder Querschnittsgröße können sich dabei in Strömungsrichtung sprunghaft und/oder zumindest in einem Abschnitt auch kontinuierlich ändern. So bewirkt beispielsweise eine Radiusverringerung einer Erhöhung der Zentrifugalkraft, während ein Radiuserhöhung einer Verringerung der Zentrifugalkraft entspricht. Durch Veränderung der Querschnittsform und -größe kann Einfluss auf die Strömungsgeschwindigkeit genommen werden.

Die wendel- und/oder spiralartige Leitung 1b mündet im dargestellten Ausführungsbeispiel tangential unter einem Winkel α gegenüber der Horizontalen von mindestens 30° in die Abscheidekammer 2. Im Bereich der Einmündung weist die Abscheidekammer 2 einen zylindrischen Teil 2a auf, an den sich unterhalb ein trichterförmig verjüngender Teil 2b anschließt.

Die Feststoffleitung 3 ist an den sich trichterförmig verjüngenden Teil 2b der Abscheidekammer angeschlossen, während der zylindrische Teil 2a in die Gasleitung 4 übergeht.

Im dargestellten Ausführungsbeispiel weist die Gasleitung 4 und der zylindrische Teil 2a der Abscheidekammer den gleichen Durchmesser auf. Man könnte daher auch davon sprechen, dass die Abscheidekammer durch den unteren Teil der Gasleitung 4 gebildet wird.

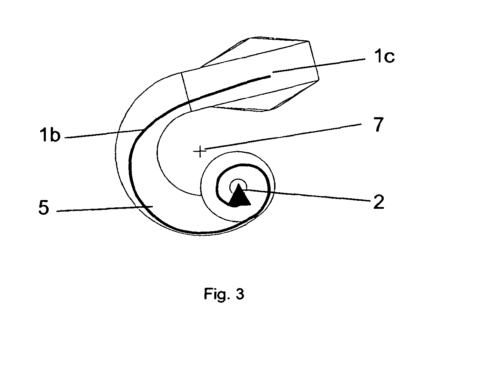

Im Rahmen der Erfindung wäre es auch denkbar, dass die Gasleitung 4 nach Art eines Tauchrohres in die Abscheidekammer 2 hineinragt oder mit einem größeren Durchmesser als die Abscheidekammer ausgebildet ist. Durch die schräg nach unten gerichtete und tangential an die Abscheidekammer angeschlossene wendel- und/oder spiralartige Leitung 1b wird der Feststoff in einem Bogen in den sich trichterförmig verjüngenden Teil 2b der Abscheidekammer 2 geleitet und gelangt dann in die Feststoffleitung 3 (siehe Fig. 1 und 3).

Das Gas 6 wird an der Innenwandung des zylindrischen Teils der Abscheidekammer 2 mit einem Drall nach oben in die Gasleitung 4 abgeführt (siehe Fig. 1). Die schräg nach unten gerichtete Strömung in der Abscheidekammer 2 verhindert auch, dass es im Bereich der Mündung der wendel- und/oder spiralartigen Leitung 1b zu einer Überlagerung des Eintrittsgasstromes mit der in der Abscheidekammer ausgebildeten Drallströmung kommt.

Die Mittel zum Trennen des zugeführten Feststoffs vom zugeführten Gas können aber auch ganz oder teilweise in der Gas-Feststoff-Suspensionsleitung 1 ausgebildet sein.

Wie aus Fig. 3 zu ersehen ist, erstreckt sich die wendel- und/oder spiralartige Leitung 1b über einen Winkelbereich von etwa 180°. Im Rahmen der Erfindung kann der Winkelbereich aber auch deutlich größer oder kleiner gewählt werden. Weiterhin ist es denkbar, dass sich der Radius und/oder die Steigung und/oder die Querschnittsform und/oder die Querschnittsgröße der wendel- und/oder spiralartigen Leitung 1b in Strömungsrichtung der Gas-Feststoff-Suspension ändert.

Die erfindungsgemäße Vorrichtung zur Durchführung chemischer und/oder physikalischer Reaktionen zwischen einem Feststoff und einem Gas, insbesondere zur Vorwärmung, Kühlung und/oder Calcinierung von feinkörnigen Materialien umfasst mehrere, übereinander angeordnete Stufen, wie sie oben anhand der Figuren 1 bis 3 beschrieben worden sind. Dabei geht die Gasleitung einer Stufe in die Gas-Feststoff-Suspensionsleitung der nächst höheren Stufe über und die Feststoffleitung einer Stufe mündet in die Gas-Feststoff-Suspensionsleitung der nächst niedrigeren Stufe.

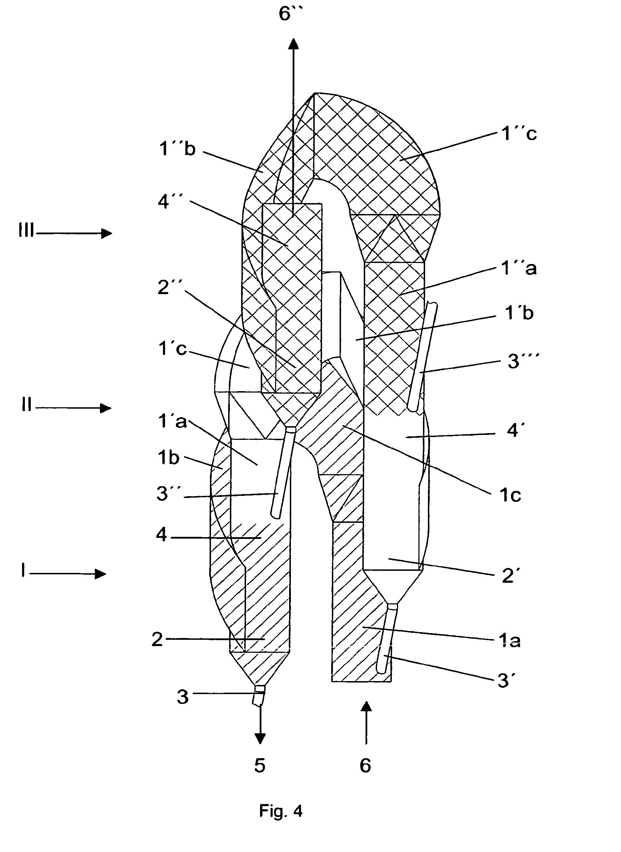

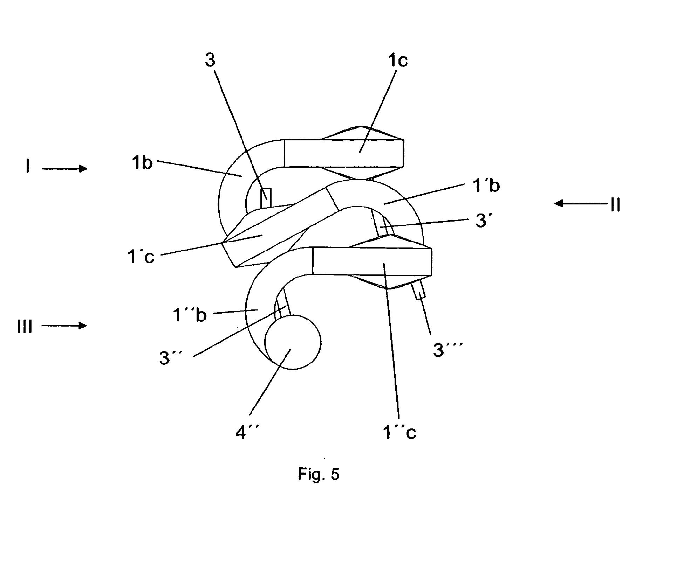

Im Folgenden wird anhand der Figuren 4 und 5 eine Vorrichtung mit drei Stufen I, II, III beschrieben, bei der es sich beispielsweise um einen dreistufigen Vorwärmer für Zementrohmaterial handelt.

Bei einer solchen mehrstufigen Anordnung wird ein zu behandelnder Feststoff in der obersten Stufe III über eine Feststoffleitung 3'" zugeführt und als behandelter Feststoff 5, beispielsweise vorgewärmter Feststoff, aus der untersten Stufe I abgeführt. Während der Feststoff somit von oben nach unten durch die drei Stufen geführt wird, durchströmt das Gas die Anordnung in umgekehrter Richtung. Bei dem der untersten Stufe zuzuführenden Gas 6 handelt es sich beispielsweise um das heiße Abgas eines Ofens oder eines Calcinators. Das in der dritten Stufe über die Gasleitung 4" abgeführte Gas 6" wird beispielsweise zur Entstaubung einem Filter oder einem nachgeschalteten hocheffizienten Abscheider zugeführt. Der behandelte Feststoff 5 gelangt beispielsweise in einen Calcinator oder einen Ofen zur weiteren Verarbeitung.

Durch die Ausbildung der Gas-Feststoff Suspensionsleitung 1 mit einer Steigleitung 1a und einer absteigenden, wendel- und/oder spiralartigen Leitung 1b können die drei Stufen sehr kompakt und ineinander verschlungen angeordnet werden. Es ist weiterhin vorgesehen, dass die wendel- und/oder spiralartigen Leitungen 1b, 1b, 1"b wenigstens zweier aufeinander folgender Stufen abwechselnd links- und rechtsdrehend ausgerichtet sind (siehe Fig. 5). In der Draufsicht können die Gas-Feststoff-Suspensionsleitungen, insbesondere die wendel- und/oder spiralartigen Leitungen zweier in Gasströmungsrichtung aufeinander folgenden Stufen mäanderförmig angeordnet werden.

Eine besonders niedrige Bauform lässt sich dadurch erreichen, dass bei wenigstens drei übereinander angeordneten Stufen die Einmündung der Feststoffleitung in die Gas-Feststoff-Suspensionsleitung der dritten bzw. einer höheren Stufe unterhalb des höchstens Punktes der zwei Stufen niedriger angeordneten Gas-Feststoff-Suspensionsleitung vorgesehen ist. Im dargestellten Ausführungsbeispiel ist gut zu erkennen, dass die Feststoffleitung 3"', welche an die Steigleitung 1"a der dritten Stufe III angeschlossen ist, unterhalb des höchsten Punktes der Gas-Feststoff-Suspensionsleitung der untersten Stufe I vorgesehen ist.

Im Rahmen der Erfindung ist es weiterhin denkbar, das wenigstens zwei parallel Stränge mit jeweils wenigstens drei Stufen vorgesehen sind.

## Patentansprüche

1. Vorrichtung zur Durchführung chemischer und/oder physikalischer Reaktionen zwischen einem Feststoff (5) und einem Gas (6), insbesondere zur Vorwärmung, Kühlung und/oder Calcinierung von feinkörnigen Materialien, mit wenigstens drei übereinander angeordneten Stufen (I, II, III), wobei jede Stufe folgende Bauteile umfasst:
e. eine Gas-Feststoff-Suspensionsleitung (1) zum Leiten einer Gas-Feststoff-Suspension, die zumindest teilweise als wendel- und/oder spiralartige Leitung (1b) ausgebildet ist,
f. Mittel zum Trennen des zugeführten Feststoffs (5) vom zugeführten Gas (6),
g. eine Feststoffleitung (3) zum Ableiten des abgetrennten Feststoffs
h. sowie eine Gasleitung (4) zum Ableiten des abgetrennten Gases, wobei die Gasleitung einer Stufe in die Gas-Feststoff-Suspensionsleitung der nächst höheren Stufe übergeht und die Feststoffleitung einer Stufe in der Gas-Feststoff-Suspensionsleitung der nächst niedrigeren Stufe mündet,
**dadurch gekennzeichnet, dass** die drei Stufen (I, II, III) kompakt und ineinander verschlungen angeordnet werden und die Einmündung der Feststoffleitung (3"') in die Gas-Feststoff-Suspensionsleitung (1") der dritten bzw. einer höheren Stufe (I, II, III) unterhalb des höchsten Punktes der zwei Stufen niedriger angeordneten Gas-Feststoff-Suspensionsleitung (1) vorgesehen ist.

2. Vorrichtung nach Anspruch 1, **dadurch gekennzeichnet, dass** die Gas-Feststoff-Suspensionsleitung (1) einen aufsteigenden und einen absteigenden Leitungsabschnitt umfasst.

3. Vorrichtung nach Anspruch 1, **dadurch gekennzeichnet, dass** die wendel-und/oder spiralartigen Leitungen (1b, 1'b, 1"b) aufeinander folgender Stufen (I; II, III) abwechselnd links- und rechtsdrehend ausgerichtet sind.

4. Vorrichtung nach Anspruch 1, **dadurch gekennzeichnet, dass** die Mittel zum Trennen des zugeführten Feststoffs (5) vom zugeführten Gas (6) zumindest teilweise in der Gas-Feststoff Suspensionsleitung (1) ausgebildet sind.

5. Vorrichtung nach Anspruch 1, **dadurch gekennzeichnet, dass** die Mittel zum Trennen des zugeführten Feststoffs (5) zumindest teilweise durch eine sich an die Gas-Feststoff-Suspensionsleitung (1) anschließende Abscheidekammer (2) gebildet werden, an welche die Feststoffleitung (3) zum Ableiten des abgetrennten Feststoffs (5) und die Gasleitung (4) zum Ableiten des abgetrennten Gases (6) angeschlossen sind.

6. Vorrichtung nach Anspruch 5, **dadurch gekennzeichnet, dass** Abscheidekammer (2) durch den unteren Teil der Gasleitung (4) gebildet wird.

7. Vorrichtung nach Anspruch 5, **dadurch gekennzeichnet, dass** die Gas-Feststoff-Suspensionsleitung (1) unter einem Winkel gegenüber der Horizontalen, der vorzugsweise zwischen 30° bis 70° liegt, an die Abscheidekammer (2) angeschlossen ist.

8. Vorrichtung nach Anspruch 5, **dadurch gekennzeichnet, dass** die Gas-Feststoff-Suspensionsleitung (1) tangential an die Abscheidekammer (2) angeschlossen ist.

9. Vorrichtung nach Anspruch 1, **dadurch gekennzeichnet, dass** wenigstens zwei parallele Stränge mit jeweils wenigstens drei Stufen (I, II, III) vorgesehen sind.

## Claims

1. Device for performing chemical and/or physical reactions between a solid material (5) and a gas (6), especially for preheating, cooling and/or calcining fine-grained materials, having at least three stages (I, II, III) arranged one above the other, each stage comprising the following components:
a. a gas-solids suspension duct (1) for conducting a gas-solids suspension, which is at least partially in the form of a helical and/or spiral duct (1b),
b. means for separating the delivered solid material (5) from the delivered gas (6),
c. a solids duct (3) for discharging the separated solid material,
d. and a gas duct (4) for discharging the separated gas, the gas duct of one stage merging into the gas-solids suspension duct of the next-higher stage and the solids duct of one stage joining the gas-solids suspension duct of the next-lower stage,
**characterised in that** the three stages (I, II, III) are arranged very compactly and in such a manner that they are intertwined and the junction of the solids duct (3"') and the gas-solids suspension duct (1") of the third or a higher stage (I, II, III) is provided below the highest point of the gas-solids suspension duct (1) arranged two stages lower.

2. Device according to claim 1, **characterised in that** the gas-solids suspension duct (1) comprises an ascending and a descending duct portion.

3. Device according to claim 1, **characterised in that** the helical and/or spiral ducts (1b, 1'b, 1''b) of consecutive stages (I, II, III) have alternating left-handed and right-handed orientations.

4. Device according to claim 1, **characterised in that** the means for separating the delivered solid material (5) from the delivered gas (6) are constructed at least in part in the gas-solids suspension duct (1).

5. Device according to claim 1, **characterised in that** the means for separating the delivered solid material (5) are formed at least in part by a separating chamber (2) which adjoins the gas-solids suspension duct (1) and to which the solids duct (3) for discharging the separated solid material (5) and the gas duct (4) for discharging the separated gas (6) are connected.

6. Device according to claim 5, **characterised in that** the separating chamber (2) is formed by the lower portion of the gas duct (4).

7. Device according to claim 5, **characterised in that** the gas-solids suspension duct (1) is connected to the separating chamber (2) at an angle to the horizontal which is preferably from 30° to 70°.

8. Device according to claim 5, **characterised in that** the gas-solids suspension duct (1) is connected to the separating chamber (2) tangentially.

9. Device according to claim 1, **characterised in that** there are provided at least two parallel strings having at least three stages (I, II, III) each.

## Revendications

1. Dispositif pour la réalisation de réactions chimiques et / ou physiques entre une matière solide (5) et un gaz (6), en particulier pour le préchauffage, le refroidissement et / ou la calcination de matériaux à grains fins, avec au moins trois étages superposés (I, II, III), sachant que chaque étage comprend les éléments suivantes :
e) une conduite de suspension de gaz et matière solide (1), qui, prévue pour conduire une suspension de gaz et matière solide, est réalisée, au moins partiellement en colimaçon et / ou en en spirale (1b),
f) des moyens de séparation pour séparer le flux de matière solide (5) du flux de gaz (6),
g) une conduite de matière solide (3) pour la dérivation de la matière solide séparée,
h) ainsi qu'une conduite de gaz (4) pour la dérivation du gaz séparé,
sachant que la conduite de gaz d'un étage se raccorde à la conduite de suspension de gaz et de matière solide de l'étage supérieur suivant et que la conduite de matière solide d'un étage débouche dans la conduite de suspension de gaz et de matière solide de l'étage inférieur suivant, **caractérisé en ce que** les trois étages (I, II, III) sont disposés de manière compacte et s'entrelacent, et que le débouché de la conduite de matière solide (3''') dans la conduite de suspension de gaz et de matière solide (1'') du troisième étage, respectivement d'un étage supérieur (I, II, III), est prévu au-dessous du point le plus élevé de la conduite de suspension de gaz et de matière solide (1) située deux étages plus bas.

2. Dispositif selon la revendication 1, **caractérisé en ce que** la conduite de suspension de gaz et de matière solide (1) comprend une section de conduite montante et une section de conduite descendante.

3. Dispositif selon la revendication 1, **caractérisé en ce que** les conduites en colimaçon et / ou en spirale (1b, 1'b, 1''b) d'étages successifs (I, II, III) sont orientées alternativement en direction giratoire gauche et droite.

4. Dispositif selon la revendication 1, **caractérisé en ce que** les moyens de séparation du flux de matière solide (5) et de flux de gaz (6) sont formés, au moins partiellement, dans la conduite de suspension de gaz et de matière solide (1).

5. Dispositif selon la revendication 1, **caractérisé en ce que** les moyens de séparation du flux de matière solide (5) sont formés, au moins partiellement, par une chambre de séparation (2) adjacente à la conduite de suspension de gaz et de matière solide (1), à laquelle sont raccordées la conduite de matière solide (3), pour la déviation de la matière solide (5) séparée, et la conduite de gaz (4), pour la déviation du gaz (6) séparé.

6. Dispositif selon la revendication 5, **caractérisé en ce que** la chambre de séparation (2) est formée par la partie inférieure de la conduite de gaz (4) .

7. Dispositif selon la revendication 5, **caractérisé en ce que** la conduite de suspension de gaz et de matière solide (1) est raccordée à la chambre de séparation (2) sous un angle situé, de préférence, entre 30 ° et 70 ° par rapport à l'horizontale.

8. Dispositif selon la revendication 5, **caractérisé en ce que** la conduite de suspension de gaz et de matière solide (1) est raccordée tangentiellement à la chambre de séparation (2).

9. Dispositif selon la revendication 1, **caractérisé en ce que** deux voies parallèles d'au moins trois étages (I, II, III) sont prévus.
